# EUROPÄISCHE PATENTSCHRIFT

(11) **EP 0 728 298 B1**
(45) Veröffentlichungstag und Bekanntmachung des Hinweises auf die Patenterteilung: **26.08.1998**
(21) Anmeldenummer: 94931495.9
(22) Anmeldetag: 28.10.1994
(51) Int. Cl.: G01L 19/06, G01L 9/00

(54) **VERFAHREN ZUM ERZEUGEN WENIGSTENS EINER AUSNEHMUNG IN EINER OBERFLÄCHE EINES SUBSTRATS ALS FORMBETT FÜR EINE MEMBRAN DURCH TROCKENÄTZEN**
METHOD OF PRODUCING AT LEAST ONE RECESS IN A SURFACE OF A SUBSTRATE AS BED FOR A DIAPHRAGM BY DRY ETCHING
PROCEDE PERMETTANT DE REALISER AU MOINS UN EVIDEMENT DANS LA SURFACE D'UN SUBSTRAT COMME LIT POUR UN DIAPHRAGME PAR GRAVURE SECHE

(30) Priorität: 11.11.1993 DE 4338575
(43) Veröffentlichungstag der Anmeldung: 28.08.1996
(73) Patentinhaber: SIEMENS AKTIENGESELLSCHAFT, 80333 München (DE)
(72) Erfinder: PETERS, Dethard, D-91315 Höchstadt (DE)
(86) Internationale Anmeldenummer: DE9401274
(87) Internationale Veröffentlichungsnummer: WO9513525

(56) Entgegenhaltungen:
- EP-A- 0 237 844
- WO-A-93/17440
- PATENT ABSTRACTS OF JAPAN vol. 10, no. 369 (P-525) (2426) 10. Dezember 1986 & JP,A,61 161 431 (YOKOGAWA HOKUSHIN ELECTRIC CORP.) 22. Juli 1986

## Beschreibung

Die Erfindung betrifft ein Verfahren zum Erzeugen eines Formbetts für eine Membran.

In vielen technischen Gebieten werden Membrane eingesetzt. Ein wichtiges Anwendungsgebiet ist die Sensorik, bei der die Auslenkung oder Schwingung einer Membran zum Messen einer physikalischen Größe ausgenutzt wird. Beispiele dafür sind die meist in Silizium gefertigten Drucksensoren oder auch Schallsensoren. In allen Anwendungen ist zu beachten, daß die Membran durch zu große Stoß- oder Druckeinwirkungen bei Überlast zerstört werden kann. Dies ist insbesondere dann der Fall, wenn die Membran aus einem relativ spröden Material wie Silizium besteht. Zur Überlastsicherung der Membran wird in der Regel ein Formbett vorgesehen, an das sich die Membran im Überlastfall anlegen kann.

Es sind einige Verfahren zum Herstellen solcher Formbetten bekannt, bei denen in einer ebenen Oberfläche eines Substrats eine Ausnehmung erzeugt wird.

Bei einem ersten Verfahren wird in der (100)-Oberfläche eines Siliziumsubstrats durch anisotropes Naßätzen mit Kalilauge (KOH) eine Ausnehmung mit einem trapezförmigen Profil erzeugt. Im Überlastfall legt sich die Membran im mittleren Bereich des flachen Bodens der Ausnehmung an. Die Stützfunktion des Formbettes kann daher nur in diesem kleinen mittleren Bereich wirken, so daß die Membran bei weiterer Beanspruchung zerstört werden kann.

Eine zweite Möglichkeit zum Herstellen solcher Formbetten besteht darin, durch mehrere, hintereinander ausgeführte Lithographieschritte mit Photolackmasken zunehmenden Durchmessers eine Ausnehmung mit treppenförmigem Profil in einem Siliziumsubstrat zu erzeugen. Durch Erhöhen der Anzahl der Lithographieschritte kann das Profil der Ausnehmung einem glatten Verlauf angenähert werden (WO 90/04701, insbesondere FIG. 3). Jedoch bleiben immer Stufen bestehen, die wegen ihrer Kerbwirkung problematisch sind. Außerdem ist das Verfahren wegen der vielen Prozeßschritte aufwendig und erfordert eine genaue Justierung der Ätzmasken bei jedem Lithographieschritt.

Auch mit Graubereichslithographie kann ein Formbett hergestellt werden. Bei diesem dritten Verfahren wird für das Substrat eine Maske mit einer Grauzone benötigt, die zum Zentrum der gewünschten Ausnehmung hin heller wird. Bei der Lithographie entsteht so unter geeigneten Belichtungsbedingungen ein Lackprofil mit zum Zentrum hin abnehmender Dicke. Beim anschließenden Ätzen des Substrats weicht die Lackmaske zurück und gibt immer mehr Substratflächen frei. Ein Nachteil dieses Herstellungsverfahrens liegt darin, daß das Zurückweichen der Lackmaske sich bestenfalls bis zu einer Größe von 10 bis 20 µm realisieren läßt. Damit ist das Verfahren nicht anwendbar, wenn der Durchmesser des Formbetts wesentlich größer sein soll als seine Tiefe.

Eine vierte Möglichkeit zum Herstellen des Formbetts ist das mechanische Bearbeiten des Substrats durch Drehen, Fräsen, Schleifen, Polieren oder Strahlen. Die Präzision dieser Verfahren ist bei Profiltiefen von einigen µm unzureichend.

Zum Ätzen von Substratoberflächen sind Ätzverfahren bekannt, die als Trockenätzen bezeichnet werden. Das charakteristische Merkmal solcher Trockenätzprozesse ist die chemische Reaktion von Radikalen oder Ionen eines Ätzgases mit der Substratoberfläche unter Bildung eines flüchtigen Reaktionsproduktes. Die chemische Reaktion kann spontan, ionen-, elektronen- oder photoneninduziert sein. Die Ätzgasradikale werden im allgemeinen in einem Niederdruckplasma typischerweise zwischen 10⁻¹ und 10³ Pa erzeugt. Das reaktive Trockenätzen wird in diesen Fällen deshalb oft auch als Plasmaätzen bezeichnet. Das Plasma kann durch ein elektromagnetisches Hochfrequenzfeld erzeugt werden, das entweder an Elektroden angelegt oder direkt als Mikrowellen zugeführt wird. Zur Durchführung des Trockenätzprozesses sind mehrere Plasma-Reaktortypen bekannt. Alle Typen haben einen Rezipienten, in dem das zu ätzende Substrat angeordnet wird und der mit Anschlüssen zum Evakuieren und zum Zuführen des Ätzgases versehen ist. Bei einem ersten Reaktortyp, dem sogenannten Tunnelreaktor (Barrel reactor), ist innerhalb eines Gehäuses, das vorzugsweise aus Quarz besteht, eine hohlzylindrische, perforierte Abschirmung vorgesehen, die einen Tunnel bildet. Auf einander gegenüberliegenden Seiten ist die Abschirmung von im Querschnitt etwa halbkreisförmigen Elektroden umgeben. An die Elektroden wird mit Hilfe eines Hochfrequenzgenerators ein elektromagnetisches Hochfrequenzfeld angelegt. Innerhalb der Abschirmung ist auf einem sogenannten Boot das zu ätzende Substrat angeordnet. Die Abschirmung bewirkt, daß keine geladenen Teilchen (Elektronen, Ionen) an das Substrat gelangen. Bei einem zweiten Reaktortyp wird das Substrat auf der ebenen Oberfläche einer in dem Rezipienten angeordneten Elektrode angeordnet. Es kann nun in einer ersten bekannten Ausführungsform die Elektrode mit dem Substrat geerdet sein und eine weitere ebene Elektrode parallel zu der Elektrode mit dem Substrat in dem Rezipienten angeordnet sein, die elektrisch mit dem Hochfrequenzgenerator verbunden ist. In einer anderen bekannten Ausführungsform ist die Elektrode mit dem Substrat selbst an den Hochfrequenzgenerator angeschlossen und die zweite Elektrode geerdet. Es kann allerdings auch das Gehäuse des Rezipienten geerdet sein und somit als zweite Elektrode vorgesehen sein. Bei einem dritten Reaktortyp werden die Gasradikale in einem Plasmaraum mittels Mikrowellen erzeugt und über eine Zuleitung in eine Ätzkammer geleitet, in der das zu ätzende Substrat angeordnet ist. Eine Übersicht über diese und weitere bekannte Reaktortypen sowie verschiedene Ausführungsformen von Trockenätzverfahren gibt das Buch von Landolt-Börnstein: "Numerical Data and Functional Relationsship in Science & Technology Group 3 -Chrystal & Solid State Physics, Vol. 17, Semiconductors, Subvolume c, Technology of Si, Ge und SiC", Tokyo 1984, Springer-Verlag, Seiten 319 bis 321, 326 bis 328 und 566 und 567.

Der Erfindung liegt nun die Aufgabe zugrunde, ein Verfahren zum Erzeugen eines Formbetts für eine Membran anzugeben. Dabei soll die Ausnehmung in ihrer Tiefe und in ihren lateralen Abmessungen präzise und reproduzierbar einstellbar sein und ein glattes Tiefenprofil aufweisen.

Diese Aufgabe wird gemäß der Erfindung gelöst mit den Merkmalen des Anspruchs 1. In einem Trockenätzprozeß wird zunächst auf die zu ätzende Substratoberfläche die Lochblendeneinrichtung aufgesetzt oder aufgebracht. Die Lochblendeneinrichtung deckt den Bereich der Substratoberfläche ab, in dem die Ausnehmung zu erzeugen ist. Dabei bilden die Lochblendeneinrichtung und die Substratoberfläche einen Hohlraum, der nur über eine Öffnung in der Lochblendeneinrichtung mit dem Reaktionsraum verbunden ist. Somit können die während des Ätzens in dem Reaktionsraum vorhandenen Ätzradikale nur noch durch die Öffnung in der Lochblendeneinrichtung zu dem zu ätzenden Bereich der Substratoberfläche gelangen. Damit wird jedoch die Ätzrate in diesem zu ätzenden Bereich ortsabhängig. Da sich die Ätzradikale weitgehend geradlinig bewegen, ist die Ätzrate nämlich an einem Ort innerhalb des zu ätzenden Oberflächenbereichs in guter Näherung proportional zum Raumwinkel, unter dem man von diesem Ort auf der Oberfläche den Reaktionsraum durch die Öffnung der Lochblendeneinrichtung sehen kann. Die Ätzrate ist in einem Zentrum des zu ätzenden Oberflächenbereichs direkt unterhalb der Öffnung der Lochblendeneinrichtung maximal und nimmt nach außen zu den Rändern hin immer weiter ab. Dabei überträgt sich die glatte, d.h. stetig differenzierbare, Änderung des Raumwinkels direkt auf die Ätzrate und damit auf das Ätzprofil. Es entsteht somit eine Ausnehmung mit einem glatten, weichen Ätzprofil.

Vorteilhafte Ausgestaltungen gemäß der Erfindung ergeben sich aus den Unteransprüchen.

Zur weiteren Erläuterung wird auf die Zeichnung Bezug genommen, in deren
- FIG 1: ein Substrat mit aufgesetzter Lochblendeneinrichtung im Querschnitt,
- FIG 2: das Tiefenprofil eine Ausnehmung in der Substratoberfläche nach Entfernen der Lochblendeneinrichrung,
- FIG 3: eine Ausführungsform einer Trockenätzvorrichtung zum Erzeugen einer Ausnehmung in dem Substrat und
- FIG 4 und 5: eine Ausführungsform einer Vorrichtung mit einer zylindrischen Lochblendeneinrichtung und einer Ätzschutzschicht auf dem Substrat in der Draufsicht bzw. im Querschnitt
schematisch dargestellt sind. Entsprechende Teile sind mit denselben Bezugszeichen versehen.

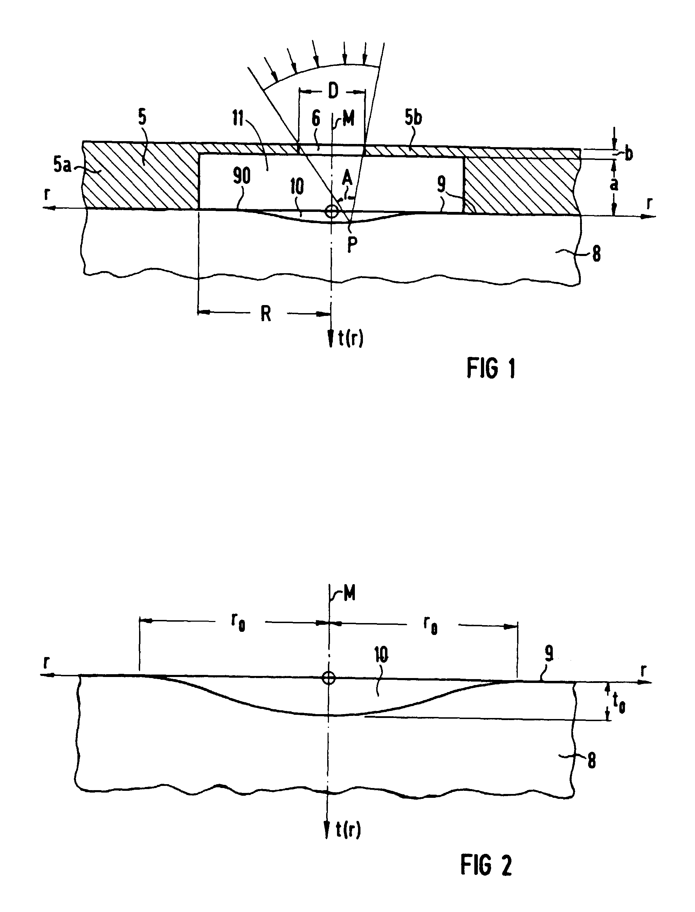

In der FIG 1 sind ein Substrat mit 8, seine Oberfläche mit 9, ein Bereich der Oberfläche 9 mit 90, eine in diesem Bereich 90 liegende Ausnehmung in der Oberfläche 9 mit 10, ein Punkt auf dem Boden dieser Ausnehmung 10 mit P, eine topfartige Lochblendeneinrichtung mit 5 mit einem sockelartigen Seitenteil 5a und einem Deckelteil 5b, eine Öffnung in dieser Lochblendeneinrichtung in dem Deckelteil 5b mit 6, der Durchmesser dieser Öffnung mit D, die der Dicke des Deckelteils 5b entsprechende Tiefe dieser Öffnung 6 mit b, eine Mittelachse der Öffnung 6 mit M, der Abstand der Öffnung 6 von der Oberfläche 9 des Substrats 8 mit a, ein von der Lochblendeneinrichtung 5 und der Substratoberfläche 9 eingeschlossener Hohlraum mit 11, ein jenseits des Hohlraums 11 auf der anderen Seite der Öffnung 6 liegender Reaktionsraum mit 4 und ein von dem Punkt P durch die Öffnung 6 gesehener Raumwinkelausschnitt mit A bezeichnet. Die Lochblendeneinrichtung 5 ist oben bis auf die Öffnung 6 geschlossen und nach unten offen. Mit ihrem ringsum geschlossenen Sockelteil 5a ist die Lochblendeneinrichtung 5 auf die Oberfläche 9 des Substrats 8 entweder in vorgefertigter Form aufgesetzt oder durch Aufwachsen und Strukturieren entsprechender Schichten aufgebracht und wird in der Regel nach dem Erzeugen der Ausnehmung wieder entfernt. In der dargestellten vorteilhaften Ausführungsform ist die zu ätzende Substratoberfläche 8 eben und die Öffnung 6 in der aufgebrachten Lochblendeneinrichtung 5 ist parallel zur Oberfläche 9 gerichtet. Die Gestalt der Öffnung 6 überträgt sich nun in definiert unscharfer Form auf die Gestalt der erzeugten Ausnehmung 10. Beispielsweise wird bei einer rechteckigen Öffnung 6 die Ausnehmung 10 im wesentlichen rechteckig und bei einer kreisrunden Öffnung 6 im wesentlichen auch kreisrund sein.

Die Oberfläche 9 des Substrats 8 kann allerdings auch beliebig gekrümmt sein. Die Lochblendeneinrichtung 5 ist dann entsprechend der Oberfläche 9 anzupassen. Die Öffnung 6 kann auch zur Oberfläche 9 des Substrats 8 geneigt sein. Man erhält dann ein asymmetrisches Tiefenprofil der Ausnehmung 10.

Durch einen einfliegenden Strom von Ätzgasradikalen aus dem Reaktionsraum 4 durch die Öffnung 6 zur Oberfläche 9 entsteht nun während des Trockenätzprozesses in der dargestellten Ausführungsform eine Ausnehmung 10 in der Substratoberfläche 9, deren Tiefenprofil t(r) in sehr guter Näherung der Durchbiegung einer Membran entspricht.

Dieses Tiefenprofil t(r) ist für eine kreisrunde Ausnehmung 10 in der FIG 2 nochmal näher dargestellt. Es kann durch die Gleichung vierter Ordnung t(r) = t₀ ((r/r₀)²-1)² beschrieben werden. r₀ ist der maximale Radius der Ausnehmung 10 bezogen auf die Mittelachse M der Öffnung 6 der bereits entfernten und daher in FIG 2 nicht mehr dargestellten Lochblendeneinrichtung 5. Der maximale Radius r₀ ist abhängig von dem Durchmesser D, der Tiefe b der Öffnung 6 und ihrem Abstand a von der Oberfläche 9 des Substrats 8. Falls nun der seitliche Rand des Hohlraums 11, der von den Seitenwänden der Lochblendeneinrichtung 5 bestimmt ist, in einer radialen Richtung näher an der Mittelachse M liegt als der maximale Radius r₀, so bricht das Tiefenprofil an dieser Stelle des Randes ab. Der tatsächliche Radius der Ausnehmung 10 ist dann nur so groß wie der mit R bezeichnete Abstand des Hohlraumrands von der Mittelachse M. Ihre maximale Tiefe t₀ hat die Ausnehmung 10 entlang der Mittelachse M. Diese maximale Tiefe t₀ ist durch die Ätzzeit einstellbar.

Zum Ätzen der Ausnehmung 10 ist in allen Ausführungsformen das Bereitstellen von Ätzgasradikalen in dem Reaktionsraum 4 notwendig. Diese Ätzgasradikale reagieren chemisch mit dem Material des Substrats 8 unter Bildung eines gasförmigen, flüchtigen Reaktionsprodukts. Typischerweise werden Halogenverbindungen als Ätzgas wegen der hohen Reaktivität der Halogenradikale, insbesondere der Fluor- und Chlorradikale, verwendet. Ätzbar sind alle Substratmaterialien, für die es geeignete Ätzgase gibt. Vorzugsweise werden als Materialien für das Substrat 8 Halbleitermaterialien wie Silicium (Si), Germanium (Ge) oder auch Siliciumcarbid (SiC) vorgesehen. Es können allerdings auch Substrate 8 aus Metallen oder Isolatoren geätzt werden.

Die Ätzgasradikale werden in einer besonders vorteilhaften Ausführungsform in einem Niederdruckplasma erzeugt. Unter Niederdruck wird dabei ein Druck von 0,01 bis 1000 Pa und vorzugsweise 0,1 bis 100 Pa verstanden. Das Niederdruckplasma kann in einer von dem Reaktionsraum 4 getrennten Plasmakammer erzeugt werden. Die entstandenen Ätzgasradikale werden dann über eine Gasleitung in den Reaktionsraum 4 geleitet. In einer anderen Ausführungsform wird das Niederdruckplasma direkt innerhalb des Reaktionsraumes 4 erzeugt.

Zum Erzeugen des Niederdruckplasmas und damit der Ätzgasradikale ist prinzipiell jeder bekannte Plasmareaktor verwendbar. Eine Übersicht über die gängigen Reaktort In gibt das Buch von Landolt und Börnstein, a.a.O., das als in die Offenbarung der hier vorliegenden Anmeldung miteinbezogen gelten soll.

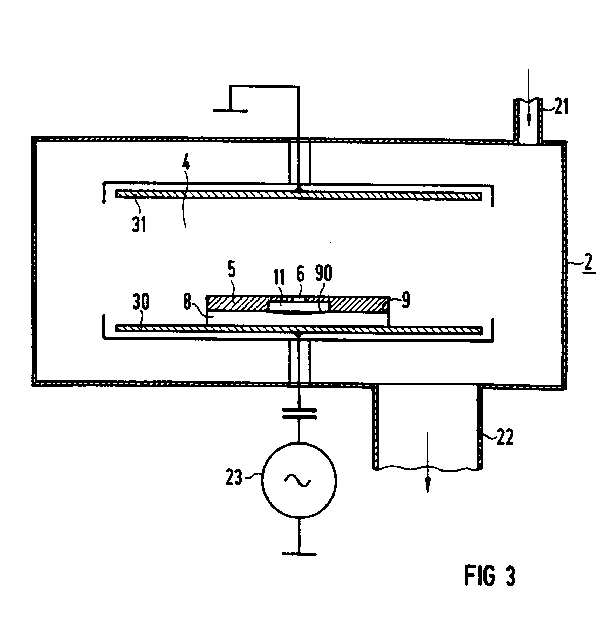

In der FIG 3 ist ein Ausführungsbeispiel einer Vorrichtung zur Durchführung des Verfahrens mit einem Parallelplattenreaktor veranschaulicht. In einem Rezipienten 2 sind zwei parallele Platten als Elektroden 30 und 31 angeordnet. Zwischen den Elektroden 30 und 31 liegt der Reaktionsraum 4. Auf der unteren Elektrode 30 wird das Substr 8 mit der Lochblendeneinrichtung 5 angeordnet. Die Lochblendeneinrichtung 5 wird in der Regel vor dem Einbringen des Substrats 8 in den Rezipienten 2 auf das Substrat 8 als Ganzes aufgesetzt. Die Elektrode 30 mit dem Substrat 8 ist über einen Kondensator an einen Hochfrequenzgenerator 23 angeschlossen, die andere Elektrode 31 und das Gehäuse des Rezipienten 2 sind geerdet. Über einen Saugstutzen 22 wird der Rezipient 2 evakuiert und über einen Zuführstutzen 21 mit Ätzgas beschickt. Es wird ein bestimmter niedriger Druck eingestellt, der im allgemeinen so klein ist, daß die mittlere freie Weglänge der in dem Reaktionsraum 4 erzeugten Ätzgasradikale größer ist als der Abstand a der Öffnung 6 zur Substratoberfläche 9 und zumindest so groß, daß die Ätzgasradikale den Hohlraum 11 zur Oberfläche 9 durchqueren können.

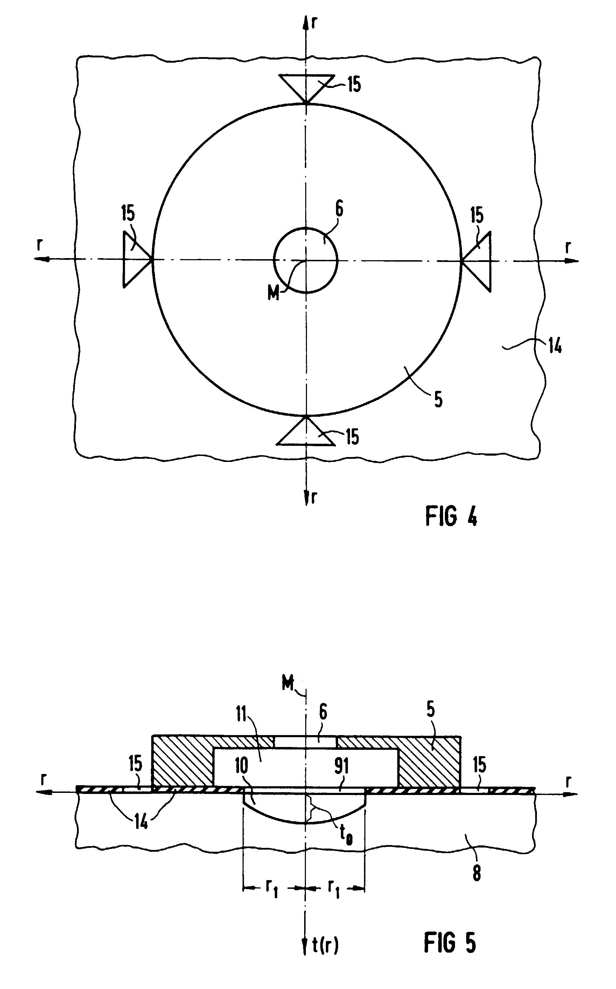

In den FIG. 4 und 5 ist eine besonders vorteilhafte Ausführungsform einer Vorrichtung zur Durchführung des Verfahrens in einer Draufsicht bzw. im Querschnitt dargestellt. Auf die Oberfläche 9 des Substrats 8 ist eine Ätzschutzschicht 14 aufgebracht. Diese Ätzschutzschicht 14 wurde derart strukturiert, daß ein kreisrunder Ätzbereich 91 der Oberfläche 9 mit Radius r₁ freigelegt ist und vorzugsweise vier Justiermarken 15 radialsymmetrisch zum Ätzbereich 91 erzeugt sind. Es wird nun eine zylindersymmetrische Lochblendeneinrichtung 5 wie ein umgestülpter Zylindertopf auf die Ätzschutzschicht 14 aufgesetzt. Dieser Zylindertopf kann als Drehteil beispielsweise aus Aluminium gefertigt sein. In dem Boden des Zylindertopfes ist die Öffnung 6 vorgesehen, die kreisrund ausgebildet ist und deren Mittelachse M gleich der Zylinderachse des Zylindertopfes ist. Die Lochblendeneinrichtung 5 wird nun mit Hilfe der Justiermarken 15 beispielsweise von Hand unter einem Mikroskop so justiert, daß die Mittelachse M ihrer Öffnung 6 senkrecht durch den Mittelpunkt des kreisrunden Ätzbereichs 91 verläuft. In dieser Ausführungsform wird der Rand der Ausnehmung 10 genau durch den in der Ätzschutzschicht 14 gebildeten Ätzbereich 91 definiert.

Das Ätztiefenprofil wird für einen Radius r₁ < r₀ damit an dem Rand des Ätzbereichs 91 senkrecht abgeschnitten, d.h. es gilt t(r) = t₀ ((r/r₀)²-1)² für r < r₁ und t(r) = 0 für r ≥ r₁. Die Ätzschutzschicht 14 kann nach dem Abheben der Lochblendeneinrichtung 5 wieder entfernt werden. Bei einem Substrat 8 aus Si ist beispielsweise eine Ätzschutzschicht 14 aus SiO₂ geeignet. Das Substrat 8 kann mit gepufferter Flußsäure hinterher restlos entschicht werden.

Typische Abmessungen der Ausnehmung 10 betragen vorzugsweise etwa 10 um bis 1 mm für ihre lateralen Abmessungen, insbesondere r₀ oder r₁ oder R, und vorzugsweise etwa 5 µm bis 50 um für ihre maximale Tiefe t₀.

Es kann auch in einer nicht dargestellten Ausführungsform eine Lochblendeneinrichtung 5 mit mehreren Öffnungen vorgesehen werden. Das Tiefenprofil der Ausnehmung 10 ergibt sich dann als Überlappung (Faltungsintegral) der Einzelprofile für die einzelnen Öffnungen 6, wenn die Öffnungen 6 nahe genug beieinander liegen. Wenn die Abstände der Öffnungen 6 zueinander hinreichend groß sind, können mit dieser Lochblendeneinrichtung 5 mehrere Ausnehmungen 10 mit den Einzeltiefenprofilen der entsprechenden Öffnungen 6 erzeugt werden. Außerdem ist es auch möglich, mehrere Lochblendeneinrichtungen 5 auf eine Oberfläche 9 eines Substrats 8 nebeneinander aufzusetzen oder aufzubringen.

Als Material für die Lochblendeneinrichtung 5 sind vorzugsweise Metalle zu wählen wie beispielsweise Aluminium (Al), Eisen (Fe), Nickel (Ni), Titan (Ti), Molybdän (Mo) oder auch Chrom (Cr).

## Patentansprüche

1. Verfahren zum Erzeugen eines Formbetts für eine Membran mit folgenden Merkmalen:
a) In einem Reaktionsraum (4) wird ein Substrat (8) angeordnet;
b) in einer Oberfläche (9) des Substrats (8) wird durch Trockenätzen eine Ausnehmung (10) erzeugt, indem
b1) auf die Oberfläche (9) des Substrats (8) eine Lochblendeneinrichtung (5) mit wenigstens einer Öffnung (6) derart aufgesetzt oder aufgebracht wird, daß nach dem Aufsetzen bzw. Aufbringen zwischen dem Bereich (90) der Oberfläche (9), in dem die Ausnehmung (10) zu erzeugen ist, und der Lochblendeneinrichtung (5) ein Hohlraum (11) entsteht, der nur über die Öffnung (6) mit dem Reaktionsraum (4) verbunden ist, und ferner
b2) in dem Reaktionsraum (4) Ätzgasradikale eingebracht sind, die chemisch mit dem Material des Substrats (8) unter Bildung eines flüchtigen Reaktionsprodukts reagieren können;
c) das Substrat (8) mit der Ausnehmung (10) in seiner Oberfläche (9) wird als Formbett für die Membran verwendet.

2. Verfahren nach Anspruch 1, bei dem auf die Oberfläche (9) des Substrats (8) eine Ätzschutzschicht (14) aufgebracht wird und diese Ätzschutzschicht (14) in einem Ätzbereich (91) der Oberfläche (9), in dem die Ausnehmung (10) zu erzeugen ist, vor dem Aufbringen der Lochblendeneinrichtung (5) wieder entfernt wird.

3. Verfahren nach Anspruch 2, bei dem in der Ätzschutzschicht (14) zusätzlich Justiermarken (15) zum Justieren der Lochblendeneinrichtung (5) erzeugt werden.

4. Verfahren nach einem der vcrhergehenden Ansprüche, bei dem daß ein Substrat (8) aus einem Halbleitermaterial vorgesehen wird.

5. Verfahren nach einem der vorhergehenden Ansprüche, bei dem die Ätzgasradikale in einem Niederdruckplasma erzeugt werden.

6. Verfahren nach einem der vorhergehenden Ansprüche, bei dem die Lochblendeneinrichtung (5) in vorgefertigter Form auf die Oberfläche (9) des Substrats (8) aufgesetzt wird.

7. Verfahren nach einem der vorhergehenden Ansprüche, bei cem die Membran als Teil eines Drucksensors vorgesehen ist.

8. Verfahren nach einem der vorhergehenden Ansprüche, bei dem die Öffnung (6) der Lochblendeneinrichtung (5) nach dem Aufbringen der Lochblendeneinrichtung (5) in einen vorgegebenen Abstand (a) parallel zum Bereich (90) der Oberfläche (9), in dem die Ausnehmung (10) zu erzeugen ist, angeordnet ist.

9. Verfahren nach Anspruch 8, bei dem die Öffnung (6) nach dem Aufbringen der Lochblendeneinrichtung (5) über einer Mitte des Bereichs (90) zu liegen kommt.

10. Verfahren nach einem der Ansprüche 8 oder 9, bei dem die Lochblendeneinrichtung (5) die Gestalt eines Zylindertopfes hat, die Öffnung (6) kreisförmig ausgebildet ist und die Mittelachse (M) der Öffnung (6) mit der Zylinderachse des Zylindertopfes zusammenfällt.

11. Verfahren nach einem der Ansprüche 8 oder 9, bei dem die Öffnung (6) von rechteckiger Gestalt ist.

12. Verfahren nach einem der Ansprüche 8 bis 11, bei dem eine Lochblendeneinrichtung (5) aus einem Metall verwendet wird.

## Claims

1. A method for the production of a profiled bed for a diaphragm having the following features:
a) a substrate (8) is arranged in a reaction chamber (4);
b) a recess (10) is formed in a surface (9) of the substrate (8) by dry etching in that
b1) a perforated screening device (5) having at least one opening (6) is positioned or applied onto the surface (9) of the substrate (8) in such manner that following the positioning or application, between the region (90) of the surface (9) in which the recess (10) is to be formed and the perforated screening device (5) a cavity (11) is formed which is connected to the reaction chamber (4) only via the opening (6) and
b2) etching gas radicals are introduced into the reaction chamber (4), which radicals can react chemically with the material of the substrate (8) to form a volatile reaction product;
c) the substrate (8) with the recess (10) in its surface (9) is used as profiled bed for the diaphragm.

2. A method according to Claim 1, wherein an etching protection layer (14) is applied to the surface (9) of the substrate (8) and in an etching region (91) of the surface (9) in which the recess (10) is to be formed this etching protection layer (14) is removed again before the application of the perforated screening device (5).

3. A method according to Claim 2, wherein adjusting marks (15) for the adjustment of the perforated screening device (5) are additionally produced in the etching protection layer (14).

4. A method according to one of the preceding claims, wherein a substrate (8) consisting of a semiconductor material is provided.

5. A method according to one of the preceding claims, wherein the etching gas radicals are produced in a low-pressure plasma.

6. A method according to one of the preceding claims, wherein the perforated screening device (5) is applied in prefabricated form to the surface (9) of the substrate (8).

7. A method according to one of the preceding claims, wherein the diaphragm is provided as part of a pressure sensor.

8. A method according to one of the preceding claims wherein, following the application of the perforated screening device (5), the opening (6) in the perforated screening device (5) is arranged at a predetermined distance (a) in parallel to the region (90) of the surface (9) in which the recess (10) is to be formed.

9. A method according to Claim 8 wherein, following the application of the perforated screening device (5), the opening (6) comes to lie above a centre of the region (90).

10. A method according to one of Claims 8 or 9, wherein the perforated screening device (5) has the form of a cylindrical pot, the opening (6) is of circular formation, and the central axis (M) of the opening (6) coincides with the cylindrical axis of the cylindrical pot.

11. A method according to one of Claims 8 or 9, wherein the opening (6) is of rectangular formation.

12. A method according to one of Claims 8 to 11, wherein a perforated screening device (5) made of a metal is used.

## Revendications

1. Procédé pour produire un lit conformé pour une membrane, comportant les dispositions suivantes :
a) on met un substrat (8) dans une chambre (4) de réaction ;
b) on produit par attaque chimique en voie sèche un évidement (10) dans une surface (9) du substrat (8), en
b1) posant ou déposant sur la surface (9) du substrat (8) un dispositif (5) à diaphragme comportant au moins une ouverture (6) de telle manière que, après l'avoir posé ou déposé, il est formé entre la zone (90) de la surface (9) dans laquelle l'évidement (10) doit être produit et le dispositif (5) à diaphragme une cavité (11) qui ne communique avec la chambre (4) de réaction que par l'intermédiaire de l'ouverture (6) et, de plus,
b2) en introduisant dans la chambre (4) de réaction des radicaux de gaz d'attaque chimique qui peuvent réagir chimiquement avec le matériau du substrat (8), avec formation d'un produit réactif volatil ;
c) on utilise le substrat (8) comportant l'évidement (10) ménagé à sa surface (9) comme lit conformé pour la membrane.

2. Procédé suivant la revendication 1, dans lequel on dépose une couche (14) de protection d'attaque chimique à la surface (9) du substrat (8) et, avant de déposer le dispositif (5) à diaphragme, on enlève à nouveau cette couche (14) de protection d'attaque chimique dans une zone (91) d'attaque chimique de la surface (9) dans laquelle l'évidement (10) est à produire.

3. Procédé suivant la revendication 2, dans lequel on produit dans la couche (14) de protection d'attaque chimique de plus des repères (15) d'ajustement pour l'ajustement du dispositif (5) à diaphragme.

4. Procédé suivant l'une des revendications précédentes, dans lequel on prévoit un substrat (8) en matériau semi-conducteur.

5. Procédé suivant l'une des revendications précédentes, dans lequel on produit les radicaux de gaz d'attaque chimique dans un plasma à basse pression.

6. Procédé suivant l'une des revendications précédentes, dans lequel on pose le dispositif (5) à diaphragme sous forme préfabriquée à la surface (9) du substrat (8).

7. Procédé suivant l'une des revendications précédentes, dans lequel on prévoit la membrane comme pièce d'un capteur de pression.

8. Procédé suivant l'une des revendications précédentes, dans lequel on ménage l'ouverture (6) du dispositif (5) à diaphragme après le dépôt du dispositif (5) à diaphragme à une distance (a) prescrite, parallèlement à la zone (90) de la surface (9) dans laquelle l'évidement (10) est à produire.

9. Procédé suivant la revendication 8, dans lequel l'ouverture (6) vient en contact au dessus d'un centre de la zone (90) après le dépôt du dispositif (5) à diaphragme.

10. Procédé suivant l'une des revendications 8 ou 9, dans lequel le dispositif (5) à diaphragme a la forme d'un pot cylindrique, l'ouverture (6) est réalisée de manière circulaire et l'axe (M) médian de l'ouverture (6) coïncide avec l'axe de cylindre du pot cylindrique.

11. Procédé suivant l'une des revendications 8 ou 9, dans lequel l'ouverture (6) est de forme rectangulaire.

12. Procédé suivant l'une des revendications 8 à 11, dans lequel on utilise un dispositif (5) à diaphragme en un métal.
